# EUROPÄISCHE PATENTSCHRIFT

(11) **EP 4 018 529 B1**
(45) Veröffentlichungstag und Bekanntmachung des Hinweises auf die Patenterteilung: **11.09.2024**
(21) Anmeldenummer: 20750584.3
(22) Anmeldetag: 21.07.2020
(51) Int. Cl.: H02K 1/18, H02K 3/24, H02K 3/47, H02K 3/52, H02K 11/33, H02K 21/24

(54) **SCHEIBENLÄUFERMASCHINE FÜR EINEN KRAFTFAHRZEUGANTRIEB**
DISC ROTOR MACHINE FOR A MOTOR VEHICLE DRIVE
MACHINE À ROTOR À DISQUE POUR ENTRAÎNEMENT DE VÉHICULE AUTOMOBILE

(30) Priorität: 20.08.2019 DE 102019122314
(43) Veröffentlichungstag der Anmeldung: 29.06.2022
(73) Patentinhaber: Schaeffler Technologies AG & Co. KG, 91074 Herzogenaurach (DE)
(72) Erfinder: BOSSECKER, Maximilian, 76549 Hügelsheim (DE); WITT, Holger, 77815 Bühl (DE)
(86) Internationale Anmeldenummer: PCT/DE2020/100634
(87) Internationale Veröffentlichungsnummer: WO 2021/032236

(56) Entgegenhaltungen:
- EP-A1- 3 485 558
- EP-B1- 3 485 558
- WO-A1-2008/032430
- WO-A2-2010/092400
- GB-A- 2 482 928
- JP-A- 2015 231 291

## Beschreibung

Die Erfindung betrifft eine Scheibenläufermaschine, vorzugsweise als Axialflussmaschine ausgeführt, für einen Kraftfahrzeugantrieb, mit einem (gesamtheitlich) scheibenförmig ausgebildeten Stator, wobei der Stator mehrere in einer Umfangsrichtung verteilt angeordnete, mittels zumindest eines Halteringes miteinander fest verbundene Kernsegmente sowie mehrere jeweils um ein Kernsegment (unter Ausbildung einer Spule) herum verlaufende Spulenwicklungen aufweist, mit einem relativ zu dem Stator verdrehbar gelagerten Rotor, wobei der Rotor eine erste Rotorscheibe, die zu einer ersten axialen Seite hin neben dem Stator angeordnet ist, sowie eine zweite Rotorscheibe, die zu einer der ersten axialen Seite gegenüberliegenden zweiten axialen Seite hin neben dem Stator angeordnet ist, aufweist, welche Rotorscheiben durch mehrere in einer Umfangsrichtung verteilt angeordnete, die Kernsegmente sowie Spulenwicklungen umfassende Spulen des Stators antreibbar sind, sowie mit einer die Spulen im Betrieb kühlenden Kühleinrichtung.

Aus dem Stand der Technik sind bereits Scheibenläufermaschinen in unterschiedlichen Ausführungen bekannt. Bspw. offenbart die WO 2018/ 015293 A1 einen Stator für eine Axialflussmaschine. Hierbei werden zwischen je zwei in Umfangsrichtung benachbarten Spulen Leitbleche eingelegt, die mittels einer Vergussmasse zusammen mit den Spulen zu einer Statorscheibe vergossen werden. Radial außen ist ein wassergekühlter Kanal angeordnet, sodass die Spulen im Betrieb passiv durch die Wärmeabfuhr über die Leitbleche gekühlt werden.

Als Nachteil dieser aus dem Stand der Technik bekannten Ausführung hat es sich jedoch herausgestellt, dass insbesondere wegen der vorhandenen Vergussmasse ein ausreichender Wärmeübertrag von den Spulenwicklungen auf die Leitbleche zur Ausbildung einer besonders leistungsstarken Maschine nur beschränkt bzw. sehr ineffizient ist. Zusätzlich kommt hinzu, dass die Leitbleche eine relativ große Länge aufweisen und die Wärme daher über einen relativ langen radialen Weg nach außen abgeführt werden muss.

Aus der WO 2010/092400 A2 ist eine Scheibenläufermaschine gemäß dem Oberbegriff des Anspruchs 1 bekannt.

Bezüglich weiteren Standes der Technik wird auf die JP 2015 231291 A, die WO 2008/032430 A1, die GB 2 482 928 A und die EP 3 485 558 A1 verwiesen.

Es ist daher Aufgabe der vorliegenden Erfindung, eine Scheibenläufermaschine zur Verfügung zu stellen, die zur Umsetzung einer möglichst hohen Leistungsdichte mit einer leistungsfähigeren Kühlung ausgestattet ist.

Dies wird erfindungsgemäß durch die in Anspruch 1 angegebenen Maßnahmen gelöst.

Der Stator weist ein die Spulenwicklungen aufnehmendes, mit dem zumindest einen Haltering verbundenes Trägerrad auf, wobei das Trägerrad einen zumindest eine der Spulenwicklungen unmittelbar aufnehmenden Kühlkanalabschnitt der Kühleinrichtung (unmittelbar) ausbildet.

Durch das Vorsehen des Kühlkanalabschnittes der Kühleinrichtung in das Trägerrad und die Aufnahme der Spulenwicklung in dem Kühlkanalabschnitt wird eine Haltefunktion deutlich von einer Dichtfunktion / einer Kühlfluidleitfunktion getrennt. Während bevorzugt der zumindest eine Haltering zusammen mit den Kernsegmenten eine Einheit ausbildet, die im Betrieb sämtliche Antriebskräfte aufnimmt, ist das Trägerrad vorwiegend zur Umleitung des Kühlfluids entlang der Spulenwicklungen ausgebildet. Dadurch ist es möglich, den zumindest einen Haltering aus einem stabilen Metallblech, etwa einem Stahlblech, auszubilden, während das Trägerrad kostengünstig aus einem weniger festen sowie einfacher verarbeitbaren Material, vorzugsweise einem Kunststoffmaterial, ausgebildet ist. Dadurch lässt sich das Trägerrad einfach ausformen und es wird eine Scheibenläufermaschine zur Verfügung gestellt, die einfacher herstellbar ist. Zugleich wird eine direkte Kühlung der Spulen im Betrieb ermöglicht.

Weitere vorteilhafte Ausführungen sind mit den Unteransprüchen beansprucht und nachfolgend näher erläutert.

Erfindungsgemäß ist der Kühlkanalabschnitt unmittelbar durch einen die zumindest eine Spulenwicklung aufnehmenden, in einer senkrecht zu einer zentralen Drehachse angeordneten Radialebene umlaufenden / ringförmigen Teilhohlraum des Trägerrades gebildet. Dadurch kann ein Kühlmittel im Betrieb effizient an der Spulenwicklung vorbeigeleitet werden.

Des Weiteren ist es vorteilhaft, wenn der Teilhohlraum durch zwei radial verlaufende sowie in Umfangsrichtung beabstandete Hohlspeichen des Trägerrades mit gebildet ist, welche Hohlspeichen (mit ihren Innenräumen) in einem, einen Zulauf aufweisenden, ersten radialen Bereich (des Trägerrades) in Umfangsrichtung voneinander getrennt / abgedichtet sind und in einem, zu dem ersten radialen Bereich radial versetzten, vorzugsweise radial nach innen versetzten, zweiten radialen Bereich in Umfangsrichtung miteinander verbunden sind / ineinander übergehen. Dadurch ergibt sich eine geschickte Zirkulation des Kühlmittels im Betrieb der Scheibenläufermaschine.

Besonders zweckmäßig ist ein Zulauf in dem ersten radialen Bereich zu einer ersten Umfangsseite eines die beiden Hohlspeichen voneinander abtrennenden Dichtelementes mit dem Kühlkanalabschnitt verbunden, während ein Rücklauf zu einer der ersten Umfangsseite gegenüberliegenden zweiten Umfangsseite des Dichtelementes mit dem Kühlkanalabschnitt verbunden ist.

Ist der Kühlkanalabschnitt über einen axial verlaufenden ersten Verbindungskanal mit einem ringförmigen, zwischen dem Trägerrad und einem ersten Haltering eingeschlossenen / begrenzten Zulaufkanal verbunden, wird der Zulauf geschickt zwischen der Kontur des Halterings und des Trägerrades integriert.

Demnach ist es auch zweckmäßig, wenn der Kühlkanalabschnitt über einen axial verlaufenden zweiten Verbindungskanal mit einem ringförmigen, zwischen dem Trägerrad und einem zweiten Haltering eingeschlossenen Rücklaufkanal verbunden ist.

Ist der Kühlkanalabschnitt zu seiner radialen Außenseite hin unmittelbar durch mehrere jeweils mit den Spulenwicklungen verbundene, (in axialer Richtung) gestapelt nebeneinander angeordnete Phasenringe begrenzt, werden auch die Phasenringe auf im Betrieb unmittelbar durch die Kühleinrichtung gekühlt.

Auf typische Weise ist zwischen je zwei nebeneinander angeordneten Phasenringen eine Isolierung vorgesehen, die die Phasenringe voneinander elektrisch entkoppelt.

Ist auf den Phasenringen zumindest eine mit den Phasenringen teilweise elektrisch gekoppelte Leistungselektronik angeordnet / fixiert / aufgebracht, wird diese passiv durch die Phasenringe ebenfalls gekühlt.

Für eine besonders robuste Abstützung der Spulenwicklungen ist es auch von Vorteil, wenn ein eine Spulenwicklung aufnehmender Spulenträger in dem Trägerrad mit fixiert ist.

Für eine besonders robuste Abstützung ist es von Vorteil, wenn der Spulenträger eine konische Anlagekontur aufweist, die in dem Trägerrad aufgenommen ist. Die konische Anlagekontur ist vorzugsweise zu einer Innenseite des sich ringförmig erstreckenden Spulenträgers umgesetzt und liegt flächig an einer gegensinnigen Gegenkontur des Trägerrades an.

In anderen Worten ausgedrückt, betrifft die Erfindung somit einen speziellen Aufbau sowie ein spezielles Kühlkonzept eines Scheibenläufers (vorzugsweise als Axialflussmaschine ausgebildet). Eine direkte Kühlung der Spulenwindungen / -wicklungen durch das entsprechende Kühlmedium wird durch das Aufteilen der Funktionen des Drehmomentübertrags / der Drehmomentabstützung sowie der Kühlmittelabdichtung auf zwei verschiedene Komponenten bewerkstelligt. Demnach weist der Aufbau einen Haltering auf, der die Eisenkerne sowie das Drehmoment abstützt, während eine Trägerscheibe (Trägerrad) die Spulenwicklungen aufnimmt. Zusätzlich formt die Trägerscheibe zusammen mit den Phasenringen einen abgedichteten / abgeschlossenen Kanal / Hohlraum für das Kühlmedium.

Die Erfindung wird nun nachfolgend anhand von Figuren näher erläutert, in welchem Zusammenhang auch unterschiedliche Ausführungsbeispiele beschrieben sind.

Es zeigen:
- Fig. 1: eine perspektivische Darstellung einer erfindungsgemäßen, in Längsrichtung geschnittenen Scheibenläufermaschine, ausgebildet nach einem ersten Ausführungsbeispiel,
- Fig. 2: eine Detailansicht der in Längsrichtung geschnittenen Scheibenläufermaschine nach Fig. 1 in einem Bereich eines Zulaufkanals und eines Rücklaufkanals einer erfindungsgemäß ausgebildeten Kühleinrichtung,
- Fig. 3: eine perspektivische Darstellung eines in Längsrichtung geschnittenen Trägerrades, wie es in einem in Fig. 1 eingesetzten Stator integriert ist, wobei ein eine Spulenwicklung aufnehmender Spulenträger zu erkennen ist,
- Fig. 4: eine perspektivische Darstellung des Trägerrades nach Fig. 3 in einer Vollansicht,
- Fig. 5: eine Schnittdarstellung des Trägerrades entlang der in Fig. 4 mit "V-V" gekennzeichneten Schnittlinie, wobei mehrere die Spulenwicklungen abschnittsweise aufnehmenden sowie als Kühlkanalabschnitt dienende Hohlspeichen geschnitten sind,
- Fig. 6: eine perspektivische Darstellung eines das Trägerrad mit ausbildenden Schalenelementes,
- Fig. 7: eine Draufsicht auf eine vereinfacht dargestellt, in der erfindungsgemäßen Scheibenläufermaschine auf mehreren Phasenringen zu platzierenden, zum Ansteuern mehrerer Spulen dienenden Leistungselektronikeinheit,
- Fig. 8: eine perspektivische Darstellung einer Spule mit Spulenträger und Spulenwicklung, wie sie in der Scheibenläufermaschine nach Fig. 1 eingesetzt ist,
- Fig. 9: eine perspektivische Darstellung eines Unterzusammenbaus aus mehreren in Umfangsrichtung verteilt angeordneten Spulen und mehreren radial außerhalb der Spulen angeordneten, mit den Spulen verbundenen, Phasenringen,
- Fig. 10: eine perspektivische Darstellung eines Teils des Unterzusammenbaus nach Fig. 9,
- Fig. 11: eine perspektivische Darstellung des Unterzusammenbaus nach Fig. 9 zu einer radialen Außenseite hin, wobei ein Anbringbereich der Leistungselektronikeinheit durch eine strichlierte elliptische Linie gekennzeichnet ist,
- Fig. 12: eine Querschnittsansicht des Trägerrades nach den Fign. 3 und 4, wobei mehrere mit einem Zulauf und einem Rücklauf verbundene Kühlkanalabschnitte, innerhalb derer die Spulenwicklungen angeordnet sind, zu erkennen sind,
- Fig. 13: eine perspektivische Darstellung der erfindungsgemäßen Scheibenläufermaschine bei abgenommenen Deckelblechen sowie Rotorscheiben,
- Fig. 14: eine perspektivische Darstellung eines Unterzusammenbaus aus einem Haltering mit mehreren Hälften mehrerer Kernsegmente,
- Fig. 15: eine perspektivische Darstellung des Teilzusammenbaus nach Fig. 14, in einem Längsschnitt dargestellt,
- Fign. 16a: sowie 16b zwei unterschiedliche perspektivische Darstellungen einer in Fig. 14 eingesetzten Hälfte eines Kernsegmentes mit entsprechenden Halteblechen,
- Fig. 17: eine perspektivische Darstellung eines Unterzusammenbaus aus einem Haltering mit mehreren in Umfangsrichtung umgesetzten Hälften mehrerer Kernsegmente gemäß einem zweiten Ausführungsbeispiel, wobei sich die Kernsegmente im Aufbau von dem ersten Ausführungsbeispiel unterscheiden,
- Fig. 18: eine perspektivische Ansicht des Unterzusammenbaus nach Fig. 17 von einer der in Fig. 17 dargestellten Seite abgewandten Seite,
- Fig. 19: eine perspektivische Darstellung des in Fig. 17 eingesetzten Halterings,
- Fig. 20: eine perspektivische Darstellung eines neben dem Haltering nach Fig. 19 ebenfalls in Fig. 17 eingesetzten (inneren) Halterings,
- Fig. 21: eine perspektivische Detailansicht des Unterzusammenbaus nach Fig. 17 seitens einer Kernsegmenthälfte,
- Fig. 22: eine Längsschnittdarstellung einer erfindungsgemäßen Scheibenläufermaschine nach einem dritten Ausführungsbeispiel,
- Fig. 23: eine detaillierte Längsschnittdarstellung eines Lagerbereiches zwischen einem Rotor und dem Stator der Scheibenläufermaschine nach Fig. 1, wobei die Koppelung zweier Rotorscheiben über eine Koppelwelle zu erkennen ist,
- Fig. 24: eine detaillierte Längsschnittdarstellung einer erfindungsgemäßen Scheibenläufermaschine nach einem vierten Ausführungsbeispiel, ebenfalls seitens ihres Lagerungsbereiches, wobei die Koppelwelle nun mit einer durchgängig verlaufenden Verzahnung ausgebildet ist,
- Fig. 25: eine perspektivische Darstellung einer in dem ersten Ausführungsbeispiel eingesetzten Rotorscheibe,
- Fig. 26: eine perspektivische Darstellung der in dem ersten Ausführungsbeispiel eingesetzten Koppelwelle,
- Fig. 27: eine perspektivische Darstellung der Scheibenläufermaschine nach Fig. 1 von einer ersten axialen Seite, sowie
- Fig. 28: eine perspektivische Darstellung der Scheibenläufermaschine nach Fig. 1 von einer zweiten axialen Seite.

Die Figuren sind lediglich schematischer Natur und dienen ausschließlich dem Verständnis der Erfindung. Die gleichen Elemente sind mit denselben Bezugszeichen versehen.

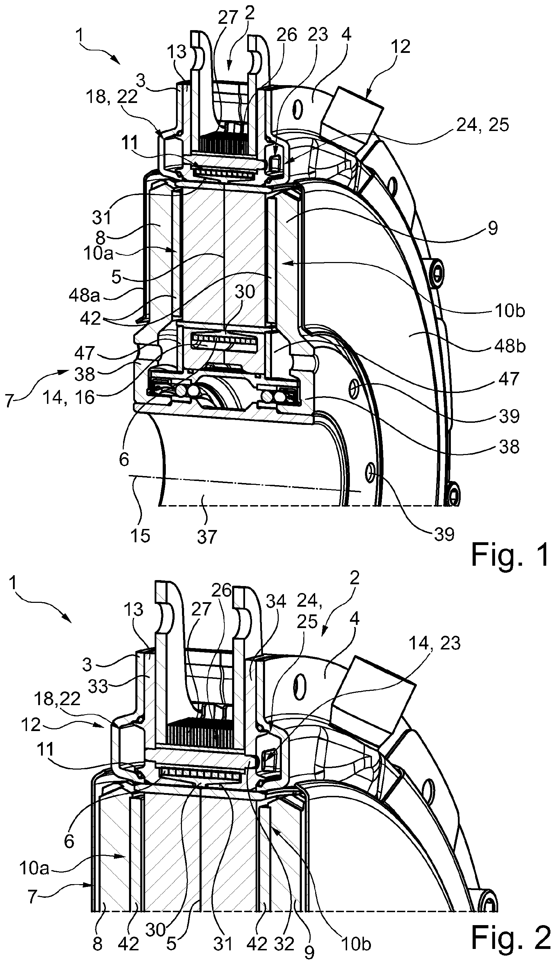

Die erfindungsgemäße Scheibenläufermaschine 1 gemäß einem bevorzugten ersten Ausführungsbeispiel ist in den Fign. 1 und 2 hinsichtlich ihres prinzipiellen Aufbaus übersichtlich zu erkennen. Die Scheibenläufermaschine 1 ist als eine Axialflussmaschine umgesetzt. Die Scheibenläufermaschine 1 dient bevorzugt zum Einsatz als eine Antriebsmaschine in einem Kraftfahrzeugantrieb. Die Scheibenläufermaschine 1 ist mit einem gesamtheitlich scheibenförmig ausgebildeten Stator 2 ausgestattet. Zudem weist die Scheibenläufermaschine 1 einen Rotor 7 auf. Der Rotor 7 ist um eine zentrale Drehachse 15 drehbar relativ zu dem Stator 2 gelagert.

Die hierin verwendeten Richtungsangaben axial, radial und in Umfangsrichtung beziehen sich auf eine zentrale Drehachse 15 des Rotors 7, sodass unter axialer Richtung / axial eine Richtung entlang / parallel zu der Drehachse 15, unter radialer Richtung / radial eine Richtung senkrecht zu der Drehachse 15 und unter Umfangsrichtung eine Richtung tangential zu einer konzentrisch um die Drehachse 15 herumverlaufenden Kreislinie zu verstehen ist.

Der Rotor 7 weist eine erste Rotorscheibe 8 auf, die zu einer ersten axialen Seite 10a des Stators 2 hin angeordnet ist sowie eine zweite Rotorscheibe 9 auf, die zu einer zweiten axialen Seite 10b des Stators 2 hin angeordnet ist. In dieser Ausführung weist jede Rotorscheibe 8, 9 einen Flanschbereich 38 auf, in dem mehrere in Umfangsrichtung verteilt angeordnete Aufnahmelöcher 39 zur Aufnahme eines Befestigungselementes, wie einer Schraube umgesetzt sind.

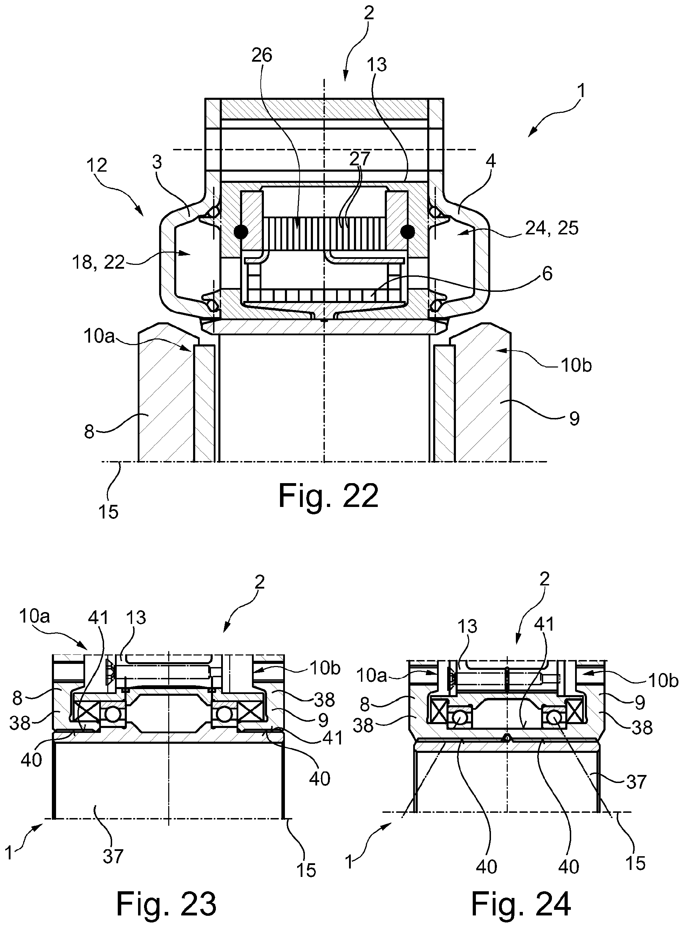

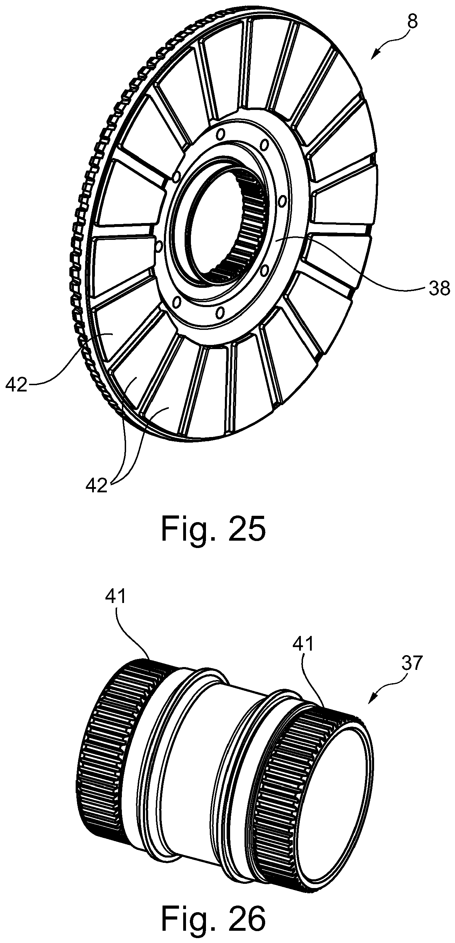

Die beiden Rotorscheiben 8, 9 sind radial innerhalb des Flanschbereiches 38 über eine Koppelwelle 37 drehfest miteinander verbunden. In dieser Ausführung greift jede Rotorscheibe 8, 9 mit einer radialen Innenverzahnung 40 in eine radiale Außenverzahnung 41 der Koppelwelle 37 ein. Wie in Fign. 23 und 26 zu erkennen, sind die beiden die Außenverzahnungen 41 aufweisenden Bereiche der Koppelwelle 37 voneinander räumlich (axial) getrennt. Gemäß einem weiteren Ausführungsbeispiel, wie es in Fig. 24 zu erkennen ist, ist es auch möglich, die Außenverzahnung 41 axial durchgängig verlaufen zu lassen. Gemäß weiteren Ausführungen ist es prinzipiell auch denkbar, jede Rotorscheibe 8, 9 mit einer Außenverzahnung zu versehen und diese in eine Innenverzahnung der Koppelwelle 37 einzuschieben.

Jede Rotorscheibe 8, 9, von denen in Fig. 25 die erste Rotorscheibe 8 exemplarisch dargestellt ist, weist mehrere in Umfangsrichtung verteilt angeordnete magnetisierbare oder magnetische Platten 42 / Plattenbereiche auf, die im Betrieb mit den nachfolgend näher beschriebenen Spulen 11 einer Spulenanordnung 35 des Stators 2 zusammen wirken.

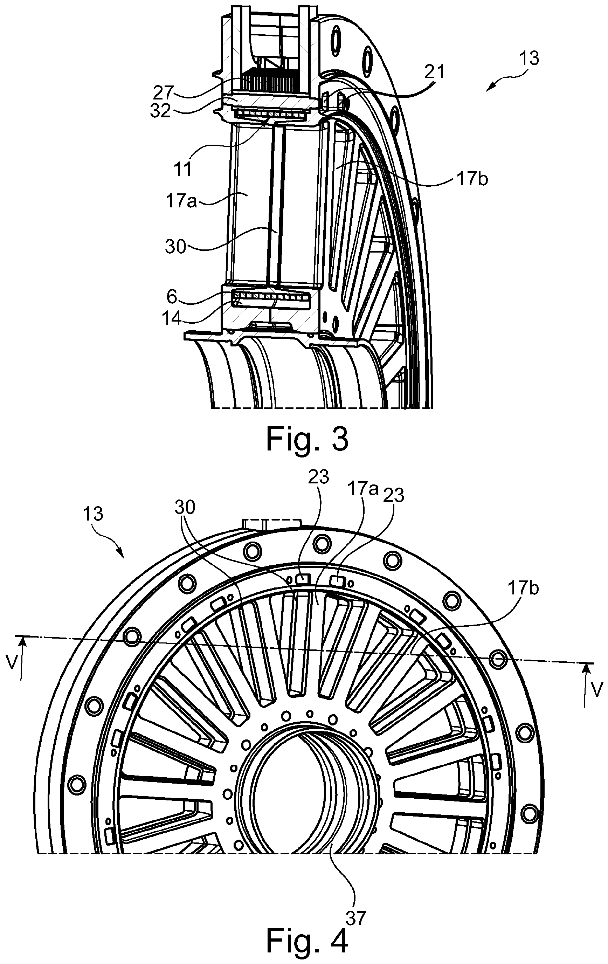

Mit den Fign. 3 bis 16b geht auch der nähere Aufbau des erfindungsgemäß ausgebildeten Stators 2 deutlicher hervor. Der Stator 2 ist in einem fertig montierten Zustand gemäß den Fign. 1 und 2 prinzipiell scheibenförmig ausgebildet. Der Stator 2 weist im Wesentlichen zwei Hauptkomponenten auf. Eine erste Hauptkomponente des Stators 2 bildet ein Trägerrad 13. Eine zweite Hauptkomponente des Stators 2 bilden zwei Halteringe 3, 4 mit mehreren in Umfangsrichtung verteilt angeordneten Kernsegmenten 5, wie nachfolgend näher beschrieben.

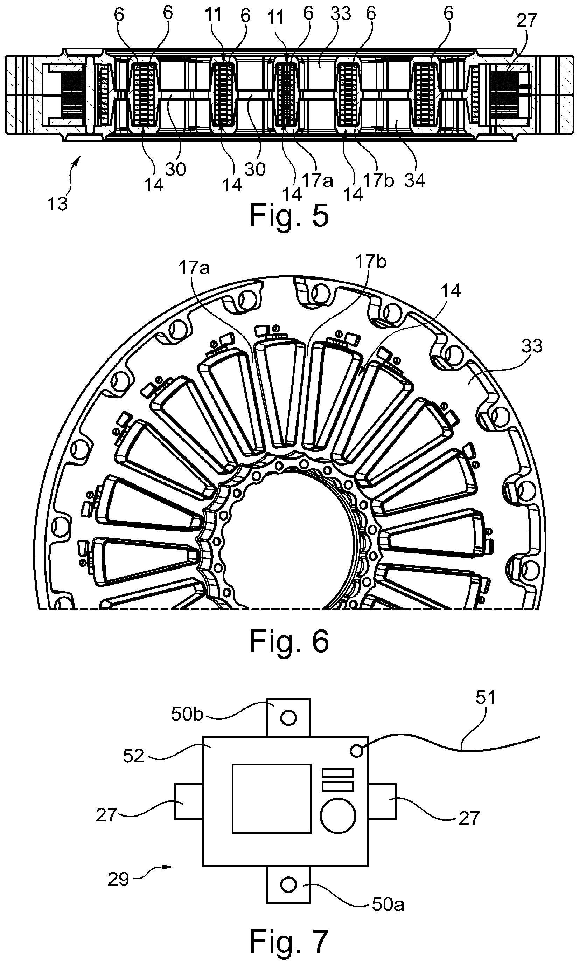

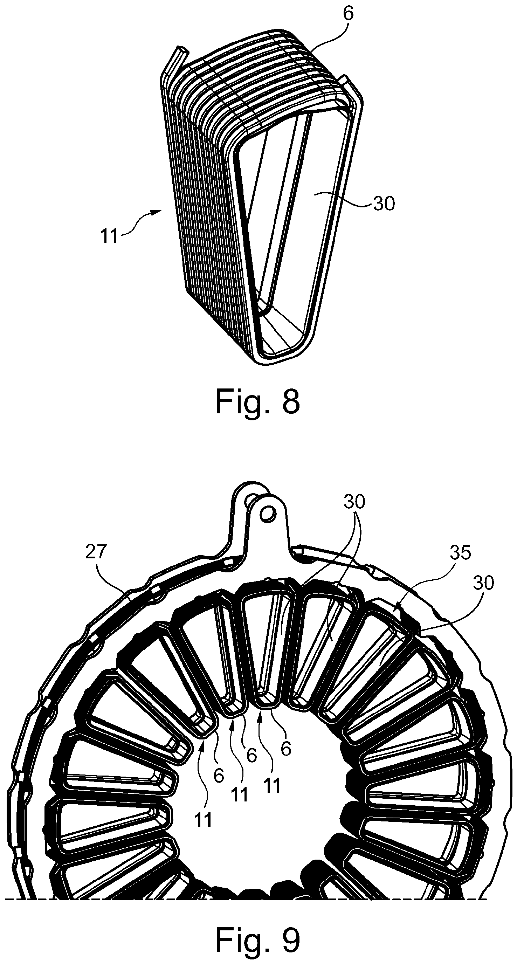

Zunächst wird näher auf den Aufbau des Trägerrades 13 eingegangen, der auch aus Fig. 4 gut hervorgeht. Das Trägerrad 13 bildet erfindungsgemäß mehrere Kühlkanalabschnitte 14 einer Kühleinrichtung 12 unmittelbar aus. Zugleich nimmt das Trägerrad 13 mehrere Spulenwicklungen 6 mehrerer Spulen 11 auf, die in Umfangsrichtung verteilt angeordnet sind. Jede Spulenwicklung 6 ist im fertig montierten Zustand des Stators 2 folglich Bestandteil einer einzelnen Spule 11. Die Spulenwicklungen 6 sind insbesondere in den Fign. 8 bis 11 gut zu erkennen. Jede Spulenwicklung 6 ist auf einem Spulenträger 30 fest aufgenommen und zusammen mit diesem Spulenträger 30 in dem Trägerrad 13 fixiert. Innerhalb jeder Spulenwicklung 6 ist im Betrieb ein Kernsegment 5 eingeschoben. Das Kernsegment 5 ist folglich als Eisenkern umgesetzt. Das Trägerrad 13 ist aus zwei Schalenelementen 33, 34 zusammengesetzt, wovon in Fig. 6 ein erstes Schalenelement 33 exemplarisch dargestellt ist.

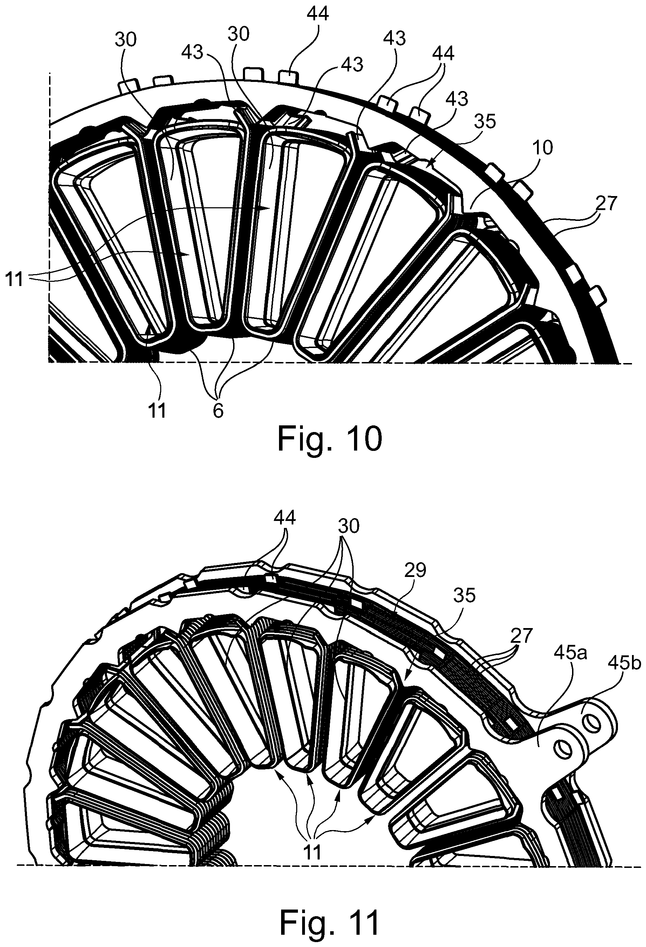

Jede Spulenwicklung 6 wird mit zwei von einer Vielzahl an Phasenringen 27 verbunden. Jeder Phasenring 27 weist dazu radial nach innen abstehende erste Nasen 43 / Laschen auf, die mit den Enden der Spulenwicklungen 6 verbunden sind (Fig. 10). Radial nach außen abstehende zweite Nasen 44 / Laschen der Phasenringe 27 sind mit mehreren in Umfangsrichtung verteilt angeordneten, unmittelbar auf diesen Phasenringen 27 aufgebrachten Leistungselektronikeinheiten 29 verbunden. Eine Leistungselektronikeinheit 29 ist beispielhaft in Fig. 7 dargestellt. Je Spule 11 ist in dieser Ausführung eine Leistungselektronikeinheit 29 vorhanden. Die einzelnen Leistungselektronikeinheit 29 bilden eine gesamtheitliche Leistungselektronik zum Ansteuern einer die Spulen 11 aufweisenden Spulenanordnung 35 aus.

Wie in Fig. 10 in Verbindung mit Fig. 11 angedeutet, ist zwischen je zwei unmittelbar benachbarten Phasenringen 27 eine Isolierung 28 in Form einer Isolierungsscheibe (z.B. Papierdichtung oder Isolierlack auf dem jeweiligen Phasenring 27) angeordnet, die dazu dient, die unmittelbar benachbarten Phasenringe 27 elektrisch voneinander zu entkoppeln. Die Phasenringe 27 sind somit unter Ausbildung eines Stapels übereinander gelegt. Zu je einem Ende des Stapels sind die Phasenringe 27 durch Haltescheiben 45a, 45b fixiert (Fig. 11).

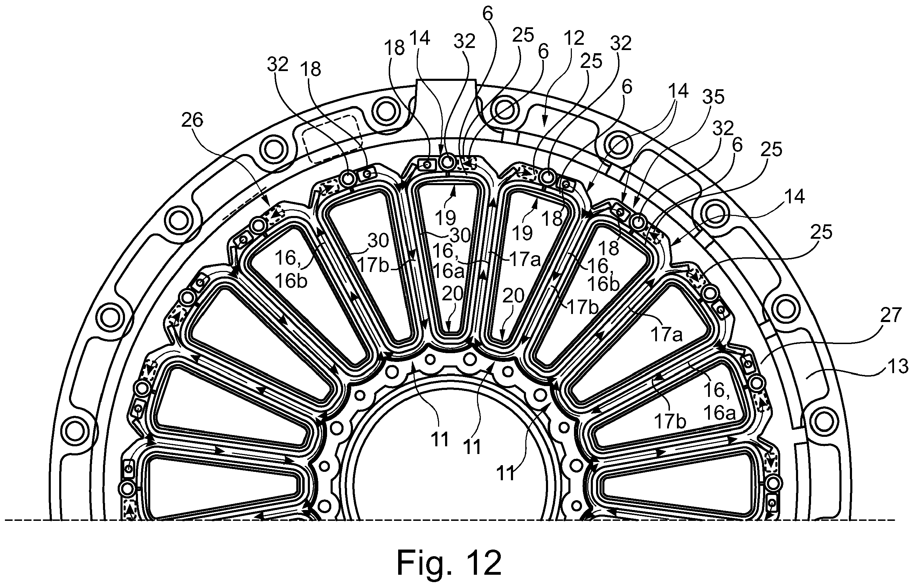

Erfindungsgemäß, wie im Zusammenhang mit Fig. 12 gut zu erkennen, ist in dem Trägerrad 13 unmittelbar der Kühlkanalabschnitt 14 ausgebildet, der unmittelbar an einer Spulenwicklung 6 vorbeigeführt wird bzw. diese Spulenwicklung 6 unmittelbar aufnimmt. Die Spulenwicklung 6 ist in einem durch zwei benachbarte Hohlspeichen 17a, 17b des Trägerrades 13 unmittelbar mit ausgebildeten Teilhohlraum 16 angeordnet.

Ein Teilhohlraum 16 erstreckt sich in der in Fig. 12 senkrecht zur Drehachse 15 verlaufenden Radialebene vollständig umlaufend / ringförmig. In einem ersten radial außen liegenden Bereich 19 ist der Teilhohlraum 16 durch ein Dichtelement 32 getrennt. Zu einer ersten Umfangsseite des Dichtelementes 32 hin ist ein Zulauf 18 an den Kühlkanalabschnitt 14 angeschlossen, zu einer, der ersten Umfangsseite entgegengesetzten, zweiten Umfangsseite des Dichtelementes 32 hin ist ein Rücklauf 25 an den Kühlkanalabschnitt 14 angeschlossen. Somit befinden sich Zulauf 18 und Rücklauf 25 in dem gemeinsamen (ersten) radialen Bereich 19.

Von dem ersten radialen Bereich 19 erstreckt sich der Teilhohlraum 16 über die beiden Hohlspeichen 17a, 17b, unter Aufnahme der entsprechenden Abschnitte der Spulenwicklung 6, in radialer Richtung nach innen und geht zu einer radialen Innenseite hin in einen zweiten radialen Bereich 20 über. Die beiden Hohlspeichen 17a, 17b sind in dem zweiten radialen Bereich 20 in Umfangsrichtung miteinander verbunden.

Auf diese Weise wird jede Spulenwicklung 6 in einem Teilhohlraum 16 aufgenommen, wobei die jeweils unmittelbar benachbarten Teilhohlräume 16 (in Fig. 12 durch einen ersten Teilhohlraum 16a und einen zweiten Teilhohlraum 16b hervorgehoben) durch jeweils eine gemeinsame Hohlspeiche 17a, 17b mit ausgebildet sind. Des Weiteren sei darauf hingewiesen, dass Zulauf 18 und Rücklauf 25 wechselweise angeordnet sind. Demnach ist bspw. in einem ersten Teilhohlraum 16a gemäß Fig. 12 der Kühlkanalabschnitt 14 zu der ersten Umfangsseite des Dichtelementes 32 hin an den Zulauf 18 angeschlossen, während ein weiterer Kühlkanalabschnitt 14 in einem zweiten Teilhohlraum 16b zu der zweiten Umfangsseite seines Dichtelementes 32 hin an den Zulauf 18 angeschlossen ist. Dasselbe gilt für die Rückläufe 25, die jeweils auf den anderen Umfangsseiten des Dichtelementes 32 hin an die Kühlkanalabschnitte 14 angeschlossen sind.

Zurückkommend auf die Fign. 1 und 2 ist zudem zu erkennen, dass ein ringförmiger Zulaufkanal 22 zwischen dem Trägerrad 13 und einem ersten Haltering 3 umgesetzt ist, welcher Zulaufkanal 22 unmittelbar den Zulauf 18 der Kühlkanalabschnitte 14 ausbildet. Der Zulaufkanal 22 ist über jeweils einen ersten axial verlaufenden Verbindungskanal 21 mit einem der Kühlkanalabschnitte 14 verbunden. Ein Rücklaufkanal 24 ist zwischen dem Trägerrad 13 und einem zweiten Haltering 4 unmittelbar ausgebildet, welcher Rücklaufkanal 24 unmittelbar den Rücklauf 25 der Kühlkanalabschnitte 14 ausbildet. Der Rücklaufkanal 24 ist über jeweils einen zweiten axial verlaufenden Verbindungskanal 23 einem der Kühlkanalabschnitte 14 verbunden.

Des Weiteren geht aus den Fig. 1 und 2 hervor, dass jeder Kühlkanalabschnitt 14 zu einer radialen Außenseite 26 hin unmittelbar durch die Phasenringe 27 begrenzt ist, sodass auch die Phasenringe 27 im Betrieb unmittelbar durch das strömende Kühlmittel gekühlt werden.

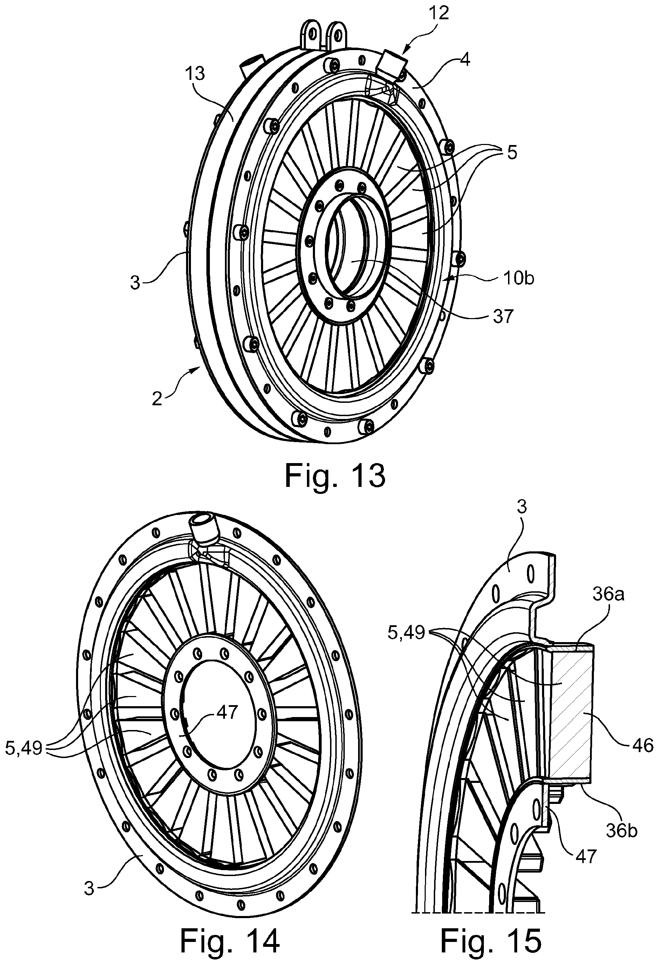

Mit den Fign. 13 bis 16b ist dann der Unterzusammenbau der Kernsegmente 5 mit den Halteringen 3, 4 zu erkennen. Der erste Haltering 3 ist mit mehreren, jeweils an Hälften 49 der Kernsegmente 5 angebrachten ersten Halteblechen 36a verschweißt, hier über eine Laserschweißnaht. Die ersten Haltebleche 36a erstrecken sich bevorzugt gebogen entlang einer gedachten Kreislinie eines Innenumfangs des ersten Halteringes 3. Die Hälften 49 der Kernsegmente 5 an sich sind durch einen aus Blech geformten Grundkörper 46 umgesetzt.

Neben dem radial von außen an dem Grundkörper 46 angebrachten ersten Halteblech 36 ist ein zweites Halteblech 36b vorhanden, das zu einer radialen Innenseite des Grundkörpers 46 angebracht ist. Das zweite Halteblech 36b ist mit einem weiteren (dritten) Haltering 47 verschweißt. Das zweite Halteblech 36b erstreckt sich bevorzugt gebogen entlang einer gedachten Kreislinie eines Außenumfangs des dritten Halteringes 47.

Auf diese wird auch der zweite Haltering 4 mit weiteren Hälften 49 der Kernsegmente 5 gefertigt. Nach Zusammenbau der Hälften 49 jedes Kernsegmentes 5 ergibt sich der Unterzusammenbau, wie er in Fig. 13 zu erkennen ist.

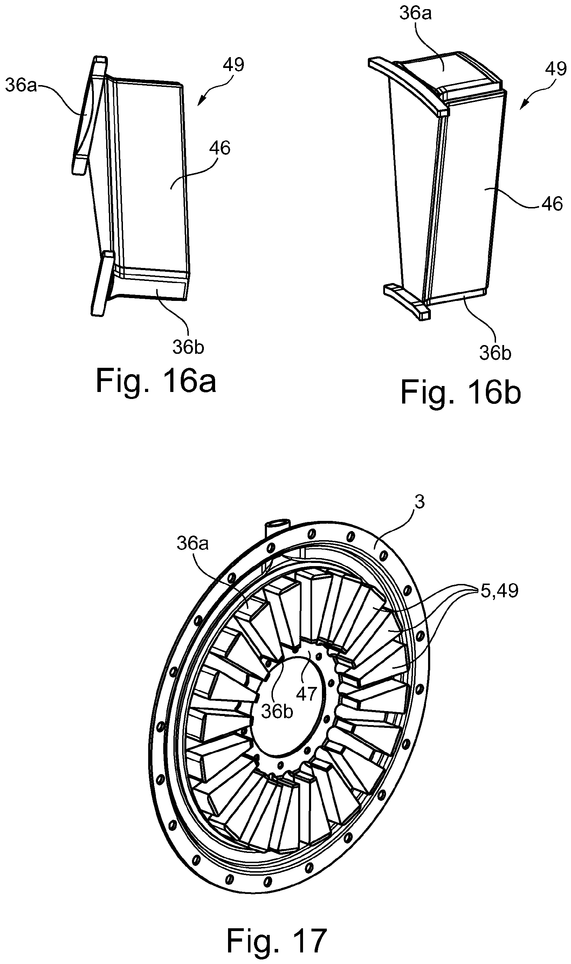

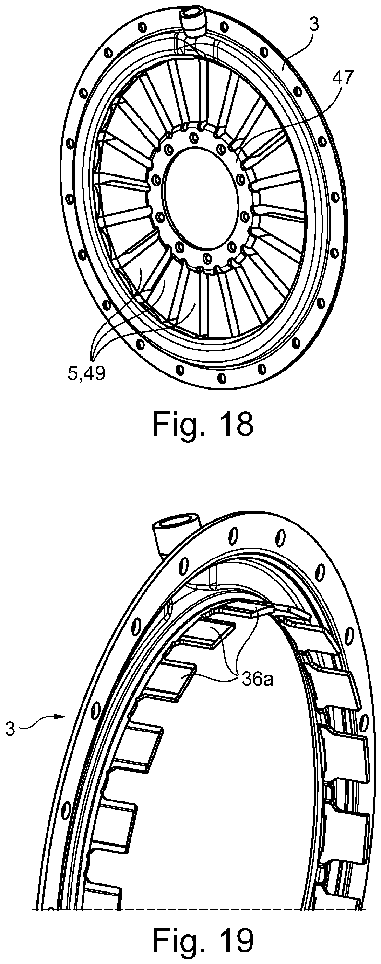

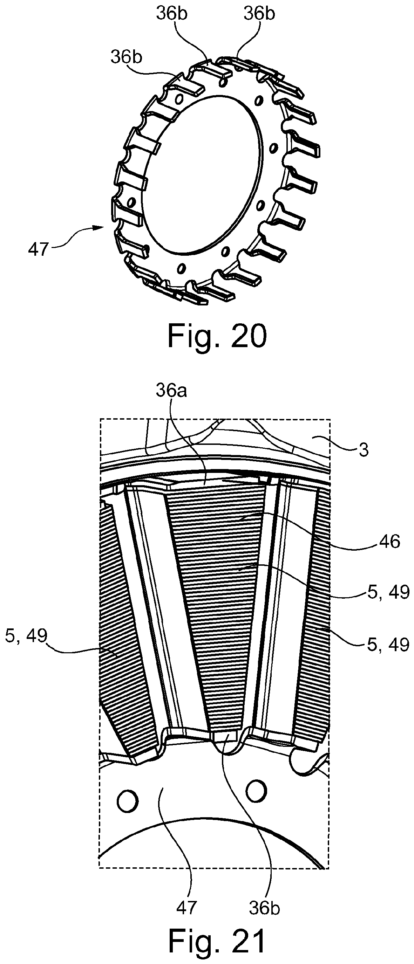

In diesem Zusammenhang sei auch auf die Fign. 17 bis 21 verwiesen, die ein alternatives Ausführungsbeispiel zu diesem Unterzusammenbau darstellen. Demnach ist es prinzipiell auch von Vorteil, wenn jeder Grundkörper 46 aus mehreren in radialer Richtung übereinander gestapelten, gesamtheitlich ein Trapez bildenden (verbackenen) Blechsegmenten ausgebildet ist. Die Blechsegmente sind bevorzugt miteinander sowie mit den Halteblechen 36a, 36b verklebt. In dieser Ausführung sind dann vorzugsweise an dem ersten Haltering 3 bereits die ersten Haltebleche 36a unmittelbar ausgeformt. Wie in Fig. 20 zu erkennen ist an dem dritten Haltering 47 auch unmittelbar das jeweilige zweite Halteblech 36b angeformt.

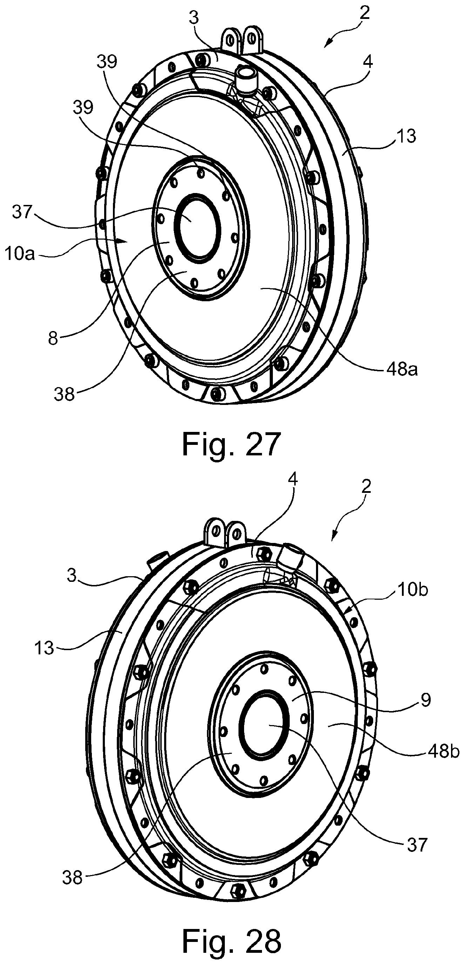

Mit den Fign. 27 und 28 ist dann die fertige Scheibenläufermaschine 1 gut zu erkennen, wobei zusätzlich von beiden axialen Seiten zwischen dem jeweiligen Flanschbereich 38 und den Halteringen 3, 4 verlaufende Deckelbleche 48a, 48b zur axialen Abdeckung angebracht sind. Die Halteringe 3, 4, 47 sind bevorzugt aus einem V2A- oder V4A-Stahl ausgeformt.

Des Weiteren sei erwähnt, dass die eingesetzten Dichtelemente 32 mit einem Elastomerschlauch zur Abdichtung bzw. Aufteilung des Spulenraumes / des Teilhohlraums 16 und zur Führung des Kühlstroms ausgestattet sind. Der Elastomerschlauch ist über einen Sicherungsstift in dem Trägerrad 13 fixiert. Die durch Dichtelemente 32 bereitgestellte Dichtung ist in weiteren Ausführungen auch unmittelbar an den Kunststoff der Schalenelemente 33, 34 des Trägerrades (vorzugsweise durch 2K-Spritzgusstechnik) angespritzt.

In anderen Worten ausgedrückt, ist erfindungsgemäß eine Flüssigkeitskühlung 12, bei der das Medium direkt auf die Drähte (der Spulenwicklungen 6) trifft, umgesetzt, wodurch ein hohes Potential geboten ist, die Verlustwärme abzutransportieren. Dadurch werden mittels der Flüssigkeitskühlung 12 die Spulendrähte 6 zu 100% erreicht und gekühlt. Dies ermöglicht es, den Motor 1 mit hohen Strömen zu belasten, was in hohen Motormomenten resultiert. Ein Hauptmerkmal des Motordesigns liegt in der Funktionstrennung zwischen Momentabstützung über Blechteile 3, 4 und der Abdichtung des Kühlmediums mit Bauteilen (Trägerrad 13) aus Kunststoff.

Der dargestellte Motor 1 besitzt zum Beispiel zwanzig einzelne Spulen 11. Es ist bekannt, dass mindestens 3 Phasen benötigt werden, damit man von "Drehstrom" sprechen kann. Dieser Motor 1 sieht z.B. zehn Phasen vor. Daher werden jeweils zwei Spulen 11, (welche um 180° versetzt - d.h. gegenüberliegend zur Rotationsachse 15 angeordnet sind) mit der gleichen Phase bestromt. Die Phasenringe 27 dienen dazu, die Spulen 11 mit Strom zu versorgen. Jede Spule 11 wird an zwei der Phasenringe 27 angeschlossen. Jeder Phasenring 27 besitzt daher zur Kontaktierung abstehende Anschlussfinger 43, 44. Die radial nach innen anstehende Finger 43 dienen zur Anbindung an den Spulendraht 6, während die nach radial außen abstehenden Finger 44 für die Anbindung an die Leistungselektronik vorgesehen sind. Zusammen ergeben die Phasenringe 27 das Phasenring-Paket, welches im Verbund eine geeignete, gekühlte Außenfläche ergibt, durch welche die Leistungselektronik gekühlt wird.

Aufgrund der Vielzahl an Phasen, kann die benötigte Leistungselektronik aus zehn kleineren separaten Einheiten 29 bestehen. Diese Einheiten 29 können (auf den Umfang verteilt) außen auf das Phasenpaket 27 platziert werden. Jede Einheit 29 bestromt also zwei Spulen 11. Jede Leistungselektronik-Einheit 29 wird über den Plus- und Minuspol gespeist und jeweils an zwei Phasenringe 27 angebunden. Die Einheiten 29 werden von einer zentralen Steuerelektronik über einen Bus (Strang mit mehreren Signalkabeln) angesteuert. Dabei wird jede Leistungselektronikeinheit 29 zusätzlich mit mindestens einem Steuerkabel aus dem Bus angesteuert. Gemäß der gezeigten Darstellungen nach Fig. 7 befindet sich die Leistungselektronik im Trockenen. In einer weiteren Variante ist es denkbar, dass sie jedoch auch auf der radial Innenseite des Phasenring-Paketes 27 platziert wird. Somit würde sie direkt vom Kühlmedium umspült und noch effizienter gekühlt. Leistungselektronikeinheit 29 ist mit zwei Batterieanschlüssen (Minus 50a; Plus 50b), einem Signalkabel 51, zwei der Phasenringe 27 und einer Platine 52 dargestellt.

Mit Fig. 22 wird der gezeigte Aufbau des Motors 1 verdeutlicht, der ein Design eines Vielphasenkonzeptes aufweist, mit dem Vorteil, mehrere Leistungselektronikmodule 29 über die Phasenringe 27 anschließen zu können und einen "glatteren" Drehstrom zu ermöglichen. Statt der benötigten +/- Pole und der vielen Phasenring 27 kann dieser Bereich auch nur noch drei Leiter (Phasenringe 27) aufweisen. Je nach Schaltung der Spulen wird eventuell noch ein zusätzlicher Null-Leiter - also ein vierter "Phasenring" benötigt. Dann ist der Motor 1 als Drehstrommotor mit nur 3 Phasen umgesetzt. Die Phasenringe 27 weisen dort, wo sie mit den entsprechenden Spulen 11 verbunden sind, geeignete abgewinkelte Anschlussfinger 43 auf. Die Kontaktierung der beiden Spulenenden erfolgt hier durch Löt-/ Schweiß- /oder Klemmverbindung. Bei einem beispielsweise 3-Phasen-Konzept fallen die einzelnen Leiter 27 wesentlich massiver aus, so dass die Bereitstellung solcher Anschlussfinger unrealistisch wird. Vielmehr werden dann die Spulenenden entsprechen abgewinkelt um mit dem richtigen Phasenring 27 verbunden.

### Bezugszeichenliste

- 1: Scheibenläufermaschine
- 2: Stator
- 3: erster Haltering
- 4: zweiter Haltering
- 5: Kernsegment
- 6: Spulenwicklung
- 7: Rotor
- 8: erste Rotorscheibe
- 9: zweite Rotorscheibe
- 10a: erste Seite
- 10b: zweite Seite
- 11: Spulenanordnung
- 12: Kühleinrichtung
- 13: Trägerrad
- 14: Kühlkanalabschnitt
- 15: Drehachse
- 16: Teilhohlraum
- 16a: erster Teilhohlraum
- 16b: zweiter Teilhohlraum
- 17a: erste Hohlspeiche
- 17b: zweite Hohlspeiche
- 18: Zulauf
- 19: erster Bereich
- 20: zweiter Bereich
- 21: erster Verbindungskanal
- 22: Zulaufkanal
- 23: zweiter Verbindungskanal
- 24: Rücklaufkanal
- 25: Rücklauf
- 26: Außenseite
- 27: Phasenring
- 28: Isolierung
- 29: Leistungselektronikeinheit
- 30: Spulenträger
- 31: Anlagekontur
- 32: Dichtelement
- 33: erstes Schalenelement
- 34: zweites Schalenelement
- 35: Spule
- 36a: erstes Halteblech
- 36b: zweites Halteblech
- 37: Koppelwelle
- 38: Flanschbereich
- 39: Aufnahmeloch
- 40: Innenverzahnung
- 41: Außenverzahnung
- 42: Platte
- 43: erste Nase
- 44: zweite Nase
- 45a: erste Haltescheibe
- 45b: zweite Haltescheibe
- 46: Grundkörper
- 47: Haltering
- 48a: erstes Deckelblech
- 48b: zweites Deckelblech
- 49: Hälfte
- 50a: erster Batterieanschluss
- 50b: zweiter Batterieanschluss
- 51: Signalkabel
- 52: Platine

## Patentansprüche

1. Scheibenläufermaschine (1) für einen Kraftfahrzeugantrieb, mit
einem scheibenförmig ausgebildeten Stator (2), der mehrere in einer Umfangsrichtung verteilt angeordnete, mittels zumindest eines Halteringes (3, 4) miteinander fest verbundene Kernsegmente (5) und mehrere jeweils um ein Kernsegment (5) herum verlaufende Spulenwicklungen (6) aufweist,
einem relativ zu dem Stator (2) verdrehbar gelagerten Rotor (7), der eine zu einer ersten axialen Seite (10a) hin neben dem Stator (2) angeordnete erste Rotorscheibe (8) und eine zu einer der ersten axialen Seite (10a) gegenüberliegenden zweiten axialen Seite (10b) hin neben dem Stator (2) angeordnete zweite Rotorscheibe (9) aufweist, wobei die Rotorscheiben (8, 9) durch mehrere in einer Umfangsrichtung verteilt angeordnete, die Kernsegmente (5) und Spulenwicklungen (6) umfassende Spulen (11) des Stators (2) antreibbar sind, und
mit einer die Spulen (11) im Betrieb kühlenden Kühleinrichtung (12),
**dadurch gekennzeichnet, dass**
der Stator (2) ein die Spulenwicklungen (6) aufnehmendes, mit dem zumindest einen Haltering (3, 4) verbundenes Trägerrad (13) aufweist,
das Trägerrad (13) einen zumindest eine der Spulenwicklungen (6) unmittelbar aufnehmenden Kühlkanalabschnitt (14) der Kühleinrichtung (12) ausbildet,
die zumindest eine der Spulenwicklungen (6) in einem durch zwei benachbarte Hohlspeichen (17a, 17b) des Trägerrades (13) unmittelbar mit ausgebildeten Teilhohlraum (16) angeordnet ist, und
der Kühlkanalabschnitt (14) unmittelbar durch den die zumindest eine Spulenwicklung (6) aufnehmenden Teilhohlraum (16) gebildet ist, der in einer senkrecht zu einer zentralen Drehachse (15) angeordneten Radialebene umläuft.

2. Scheibenläufermaschine (1) nach Anspruch 1, **dadurch gekennzeichnet, dass** der Teilhohlraum (16) durch zwei radial verlaufende sowie in Umfangsrichtung beabstandete Hohlspeichen (17a, 17b) des Trägerrades (13) mit gebildet ist, wobei die Hohlspeichen (17a, 17b) in einem einen Zulauf (18) aufweisenden ersten radialen Bereich (19) in Umfangsrichtung voneinander getrennt sind und in einem zu dem ersten radialen Bereich (19) radial versetzten zweiten radialen Bereich (20) in Umfangsrichtung miteinander verbunden sind.

3. Scheibenläufermaschine (1) nach Anspruch 1 oder 2, **dadurch gekennzeichnet, dass** der Kühlkanalabschnitt (14) über einen axial verlaufenden ersten Verbindungskanal (21) mit einem ringförmigen, zwischen dem Trägerrad (13) und einem ersten Haltering (3) eingeschlossenen Zulaufkanal (22) verbunden ist.

4. Scheibenläufermaschine (1) nach einem der Ansprüche 1 bis 3, **dadurch gekennzeichnet, dass** der Kühlkanalabschnitt (14) über einen axial verlaufenden zweiten Verbindungskanal (23) mit einem ringförmigen, zwischen dem Trägerrad (13) und einem zweiten Haltering (4) eingeschlossenen Rücklaufkanal (24) verbunden ist.

5. Scheibenläufermaschine (1) nach einem der Ansprüche 1 bis 4, **dadurch gekennzeichnet, dass** der Kühlkanalabschnitt (14) zu seiner radialen Außenseite (26) hin unmittelbar durch mehrere jeweils mit den Spulenwicklungen (6) verbundene, gestapelt nebeneinander angeordnete Phasenringe (27) begrenzt ist.

6. Scheibenläufermaschine (1) nach Anspruch 5, **dadurch gekennzeichnet, dass** jeweils zwei nebeneinander angeordnete Phasenringe (27) durch eine zwischen ihnen vorgesehene Isolierung (28) voneinander elektrisch entkoppelt sind.

7. Scheibenläufermaschine (1) nach Anspruch 5 oder 6, **dadurch gekennzeichnet, dass** auf den Phasenringen (27) zumindest eine mit den Phasenringen (27) teilweise elektrisch gekoppelte Leistungselektronikeinheit (29) angeordnet ist.

8. Scheibenläufermaschine (1) nach einem der Ansprüche 1 bis 7, **dadurch gekennzeichnet, dass** ein eine Spulenwicklung (6) aufnehmender Spulenträger (30) in dem Trägerrad (13) fixiert ist.

9. Scheibenläufermaschine (1) nach Anspruch 8, **dadurch gekennzeichnet, dass** der Spulenträger (30) eine konische Anlagekontur (31) aufweist, die in dem Trägerrad (13) aufgenommen ist.

## Claims

1. A disc rotor machine (1) for a motor vehicle drive, having
a disk-shaped stator (2) which has a plurality of core segments (5) distributed in a circumferential direction and rigidly connected to one another via at least one retaining ring (3, 4), and a plurality of coil windings (6) each extending around a core segment (5),
a rotor (7) which is rotatably mounted relative to the stator (2) and which has a first rotor disc (8) arranged next to the stator (2) towards a first axial side (10a) and a second rotor disc (9) arranged next to the stator (2) towards a second axial side (10b) opposite the first axial side (10a), wherein the rotor discs (8, 9) can be driven by a plurality of coils (11) of the stator (2) which are distributed in a circumferential direction and comprise the core segments (5) and coil windings (6), and
having a cooling device (12) which cools the coils (11) during operation,
**characterised in that**
the stator (2) has a carrier wheel (13) which receives the coil windings (6) and is connected to the at least one retaining ring (3, 4),
the carrier wheel (13) forms a cooling channel section (14) of the cooling device (12) which directly accommodates at least one of the coil windings (6),
the at least one of the coil windings (6) is arranged in a partial cavity (16) formed directly by two adjacent hollow spokes (17a, 17b) of the carrier wheel (13), and
the cooling channel section (14) is formed directly by the partial cavity (16) accommodating the at least one coil winding (6), which runs in a radial plane arranged perpendicular to a central axis of rotation (15).

2. The disc rotor machine (1) according to claim 1, **characterised in that** the partial cavity (16) is formed by two radially extending and circumferentially spaced hollow spokes (17a, 17b) of the carrier wheel (13), wherein the hollow spokes (17a, 17b) are separated from one another in the circumferential direction in a first radial region (19) having an inlet (18) and are connected to one another in the circumferential direction in a second radial region (20) radially offset from the first radial region (19).

3. The disc rotor machine (1) according to claim 1 or 2, **characterised in that** the cooling channel section (14) is connected via an axially extending first connecting channel (21) to an annular inlet channel (22) enclosed between the carrier wheel (13) and a first retaining ring (3).

4. The disc rotor machine (1) according to one of claims 1 to 3, **characterised in that** the cooling channel section (14) is connected via an axially extending second connecting channel (23) to an annular return channel (24) enclosed between the carrier wheel (13) and a second retaining ring (4).

5. The disc rotor machine (1) according to one of claims 1 to 4, **characterised in that** the cooling channel section (14) is directly bounded towards its radial outer side (26) by a plurality of phase rings (27) which are each connected to the coil windings (6) and arranged stacked next to one another.

6. The disc rotor machine (1) according to claim 5, **characterised in that** each two phase rings (27) arranged next to one another are electrically decoupled from one another by an insulation (28) provided between them.

7. The disc rotor machine (1) according to claim 5 or 6, **characterised in that** at least one power electronics unit (29) partially electrically coupled to the phase rings (27) is arranged on the phase rings (27).

8. The disc rotor machine (1) according to one of claims 1 to 7, **characterised in that** a coil carrier (30) receiving a coil winding (6) is fixed in the carrier wheel (13).

9. The disc rotor machine (1) according to claim 8, **characterised in that** the coil carrier (30) has a conical contact contour (31) which is received in the carrier wheel (13).

## Revendications

1. Machine à rotor à disque (1) pour entraînement de véhicule automobile, comportant
un stator (2) réalisé en forme de disque, qui présente une pluralité de segments de noyau (5) disposés de façon à être répartis dans une direction circonférentielle et reliés fixement les uns aux autres au moyen d'au moins un anneau de retenue (3, 4), et une pluralité d'enroulements de bobines (6) s'étendant chacun autour d'un segment de noyau (5),
un rotor (7) monté rotatif par rapport au stator (2), qui présente un premier disque de rotor (8) disposé à côté du stator (2) vers un premier côté axial (10a) et un second disque de rotor (9) disposé à côté du stator (2) vers un second côté axial (10b) opposé au premier côté axial (10a), les disques de rotor (8, 9) pouvant être entraînés par plusieurs bobines (11) du stator (2) disposées de façon à être réparties dans une direction circonférentielle et comprenant les segments de noyau (5) et les enroulements de bobines (6), et
comportant un dispositif de refroidissement (12) qui refroidit les bobines (11) pendant le fonctionnement,
**caractérisée en ce que**
le stator (2) présente une roue porteuse (13) qui reçoit les enroulements de bobines (6) et qui est reliée à l'au moins un anneau de retenue (3, 4),
la roue porteuse (13) forme une section de canal de refroidissement (14) du dispositif de refroidissement (12) qui reçoit directement au moins un des enroulements de bobines (6),
l'au moins un des enroulements de bobines (6) est disposé dans une cavité partielle (16) formée directement par deux rayons creux adjacents (17a, 17b) de la roue porteuse (13), et
la section de canal de refroidissement (14) est formée directement par la cavité partielle (16) qui reçoit l'au moins un enroulement de bobine (6) et qui tourne dans un plan radial disposé perpendiculairement à un axe de rotation central (15).

2. Machine à rotor à disque (1) selon la revendication 1, **caractérisée en ce que** la cavité partielle (16) est formée par deux rayons creux (17a, 17b) s'étendant radialement et espacés dans la direction circonférentielle de la roue porteuse (13), les rayons creux (17a, 17b) se trouvant dans une première zone radiale (19) présentant une entrée (18) étant séparés les uns des autres dans la direction circonférentielle et étant reliés les uns aux autres dans la direction circonférentielle dans une seconde zone radiale (20) qui est radialement décalée par rapport à la première zone radiale (19).

3. Machine à rotor à disque (1) selon la revendication 1 ou 2, **caractérisée en ce que** la section de canal de refroidissement (14) est reliée par un premier canal de liaison (21) s'étendant axialement à un canal d'entrée annulaire (22) inclus entre la roue porteuse (13) et un premier anneau de retenue (3).

4. Machine à rotor à disque (1) selon l'une quelconque des revendications 1 à 3, **caractérisée en ce que** la section de canal de refroidissement (14) est reliée par l'intermédiaire d'un second canal de liaison (23) s'étendant axialement à un canal de retour annulaire (24) inclus entre la roue porteuse (13) et un second anneau de retenue (4).

5. Machine à rotor à disque (1) selon l'une quelconque des revendications 1 à 4, **caractérisée en ce que** la section de canal de refroidissement (14) est délimitée directement vers son côté extérieur radial (26) par une pluralité d'anneaux de phase (27) qui sont reliés aux enroulements de bobines (6) et disposés empilés les uns à côté des autres.

6. Machine à rotor à disque (1) selon la revendication 5, **caractérisée en ce que** deux anneaux de phase (27) disposés l'un à côté de l'autre sont électriquement découplés l'un de l'autre par une isolation (28) prévue entre eux.

7. Machine à rotor à disque (1) selon la revendication 5 ou 6, **caractérisée en ce qu'au** moins une unité électronique de puissance (29), partiellement couplée électriquement aux anneaux de phase (27), est disposée sur les anneaux de phase (27).

8. Machine à rotor à disque (1) selon l'une quelconque des revendications 1 à 7, **caractérisée en ce qu'**un support de bobine (30) recevant un enroulement de bobine (6) est fixé dans la roue porteuse (13).

9. Machine à rotor à disque (1) selon la revendication 8, **caractérisée en ce que** le support de bobine (30) présente un contour d'appui conique (31) qui est reçu dans la roue porteuse (13).
